# EUROPEAN PATENT SPECIFICATION

(11) **EP 3 058 268 B1**
(45) Date of publication and mention of the grant of the patent: **30.12.2020**
(21) Application number: 14787292.3
(22) Date of filing: 17.10.2014
(51) Int. Cl.: F21V 8/00

(54) **WAVEGUIDE-BASED ILLUMINATION APPARATUS**
BELEUCHTUNGSAPPARAT AUF WELLENLEITERBASIS
APPAREIL POUR ÉCLAIRAGE EN FONCTION D'UN GUIDE D'ONDES

(30) Priority: 18.10.2013 US 201361892899 P
(43) Date of publication of application: 24.08.2016
(73) Proprietor: L.E.S.S. LTD, 1015 Lausanne (CH)
(72) Inventor: TISSOT, Yann, 1005 Lausanne (CH)
(74) Representative: Regimbeau
(86) International application number: PCT/IB2014/065386
(87) International publication number: WO 2015/056220

(56) References cited:
- EP-A1- 2 302 427
- WO-A1-99/22174
- WO-A1-2012/146960
- WO-A2-2013/015602
- US-A1- 2009 027 914
- US-A1- 2009 298 406
- US-A1- 2012 106 127

## Description

### Related Matters

This application claims the benefit of the earlier filing date of U.S. Provisional Application No. 61/892,899 filed October 18, 2013, entitled "Holder and Systems for Waveguide-Based Illumination".

An example not forming part of the invention is a holder that is used in a fiber-based side-illumination system to protect or accommodate an illuminating optical fiber and/or to determine or modify the illumination scheme of the illuminating fiber by selective absorption, reflection or transmission. Examples of holders for technical lighting are also described.

### BACKGROUND

An optical fiber is known to bring an optical signal from one fiber end to another fiber end without significant losses. In other cases, the fiber is designed to leak the optical signal in a direction substantially transverse to the propagation direction of the optical signal. This effect is typically the result of the interaction of light (the optical signal) with integrated scattering structures in the fiber or the result of a specific fiber design. The scattering elements may be realized by adding elements such as impurities while drawing the fiber, by processing holes within the fiber, or through mechanical, laser or chemical processing of the fiber.
Document WO 2012/146960 concerns a waveguide such as optical fiber receiving a primary light in a longitudinal propagation direction. The fiber has formed therein scattering structures that re-direct the propagating primary light out of the waveguide in a transverse direction. A photo - luminescent layer absorbs the re-directed primary light to thereby emit secondary wavelength converted light having a different wavelength than and broader bandwidth than the primary light, resulting in white illumination light, being the secondary light combined with any unabsorbed primary light. A reflector behind the waveguide faces the medium of photo-luminescent material.
Document WO 99/22174 concerns articles having a light fiber for illumination and diffusive reflective material around a portion of the light fiber to direct the light from the light fiber in a desired set of directions and provide diffuse illumination. The light fiber may be placed in a holder having a channel around the light fiber. The diffuse reflective sheet material may be disposed on the inner surface of the channel for reflecting light away from the holder.
Document US 2012/106127 concerns a ight emitting device includes a light source capable of emitting emission light, a first phosphor layer and an optical waveguide. The first phosphor layer has a first surface and a second surface on an opposite side of the first surface, extends in a light guiding direction, and is capable of absorbing the emission light and emitting first wavelength converted light having a longer wavelength than the emission light. The optical waveguide has a reflector, an input surface of the emission light, a reflection surface being in contact with the first surface of the first phosphor layer and provided on a surface of the reflector, and an output surface spaced from the first phosphor layer. The reflection surface and the output surface extend in the light guiding direction.
Document EP-A-2 302 427 concerns an illumination system comprising an optical fibre, a light source and an optical element configured to emit visible light from a series of emission points located along its length when coupled to the light source. Each end of the optical element and the light source are held within a sleeve such that the optical element forms a continuous light guide. The optical element is further adapted to fit within a housing and to be held in tension within that housing, such that the optical element sits within the housing in a preferred orientation.

Document US 2009/027914 concerns a structure for a center high mounted stop lamp, which comprises a light pipe, a housing and LEDs. The light pipe has an inorganic light guide coating on a lateral side thereof and has LEDs at both ends thereof. The housing covers the light pipe and has a light reflection layer. The light reflection layer is arranged around the light pipe and behind the inorganic light guide coating. The light emitted by LEDs is scattered by the light pipe and reflected by the inorganic light guide coating. The light emitted by the light pipe is concentrated and reflected out by the light reflection layer. In still other cases, luminescent materials are integrated inside the fiber-core material, inside the cladding or inside the coating of the fiber to partially or completely convert the propagating wavelength to lower or higher wavelengths.

### SUMMARY

The illumination schemes of the different cases described above may need to be controlled, conditioned, or accommodated by an appropriate waveguide holder that conforms to the side surface of the waveguide (which may be an optical fiber) in order to produce an appropriate side illumination or technical lighting, by selective reflection, absorption or transmission.
The subject matter of the invention is an illumination apparatus according to claim 1. Claims 2 -18 concern embodiments of the illumination apparatus.

### BRIEF DESCRIPTION OF THE DRAWINGS

The embodiments of the invention are illustrated by way of example and not by way of limitation in the figures of the accompanying drawings in which like references indicate similar elements. It should be noted that references to "an" or "one" embodiment of the invention in this disclosure are not necessarily to the same embodiment, and they mean at least one. Also, a given figure may be used to illustrate the features of more than one embodiment of the invention, and not all elements in the figure may be required for a given embodiment.
**Fig. 1** depicts a perspective view, an end view and a side view of a holder in which an illumination waveguide has been fixed, not forming part of the invention.
**Fig. 2a** illustrates a top view and a cross section view of a ring-shaped holder in which an illumination waveguide has been fixed.
**Fig. 2b** illustrates a top view and a cross section view of another ring-shaped holder in which an illumination waveguide has been fixed.
**Fig. 3** shows a perspective view of an optical objective to which a ring-shaped holder (with an installed illumination waveguide) has been attached.
**Fig. 4** depicts how a microscope can be used with a ring-shaped holder and installed illumination waveguide.
**Fig. 5** contains a perspective view and an end view of a strip or ribbon as the support structure of the holder, with an illumination waveguide embedded therein.
**Fig. 6** is a sectional side view of a waveguide apparatus showing various types of scattering structures of various shapes and periodicity that can re-direct the primary propagating light in the waveguide.
**Figs. 7a, 7b** and **7c** are example radiation patterns for the out-coupled light (or the re-directed primary propagating light in the waveguide).

### DETAILED DESCRIPTION

A fiber side-illumination system has a light source that is coupled to an optical fiber that has a core and a cladding. The resulting propagating light from the source is scattered out of the fiber through its side, by a scattering structure located in the core, or also in the cladding. The scattered radiation or out-coupled light takes place in a direction substantially transverse to the longitudinal axis of the fiber either in a directional manner (forming a cone of light having a radial span of under 360°) or in an isotropic manner (all around the fiber). Examples of scattering structures that can yield such a result can be found in PCT/IB2012/000617, including in particular, laser-induced structures previously formed in the core. A fiber holder holds and protects the fiber along its side. The holder can also serve to shape the flexible fiber, to yield a specific illumination scheme or pattern of radiation that emerges from the side of the holder.

The light source may be any suitable radiation source or sources. For example, the source may have an incoherent, relatively broad spectrum such as from a discharge lamp or an LED. It may also be an organic light emitting diode (OLED) or a source based on quantum dots. The source may alternatively be a coherent, sharp spectrum light source such as a laser emitting a single wavelength (also referred to here as quasi single wavelength), or it may be multiple single wavelength lasers. The source is not limited to a specific part of the light spectrum. Examples include a source that emits substantially in the UV-, Visible or infrared part of the spectrum. Other possibilities include working in the microwave and millimeter wave regions. Further examples of the light source can be found in PCT/IB2012/000617.

The optical fiber may be any suitable optical fiber such as single clad, multi-clad, photonic-crystal or micro-structured optical fiber. The fiber may be passive, *i.e.* the light propagates substantially at the same wavelength all along the fiber, or it may be active *i.e.,* the propagating light is partially or totally converted by luminescent species or material implemented inside the fiber-core, cladding or inside the coating of the fiber.

The optical fiber could be replaced by another suitable waveguide, such as a light pipe having a core medium but no cladding layer, *e.g.* a transparent rod.

The scattering structures may be particles, impurities, or holes directly integrated during fabrication of the waveguide (*e.g.,* during the drawing of the optical fiber).

The scattering structures may be continuous or discontinuous laser-induced structures; these may be formed through the application of external intense laser light to selected locations in the waveguide. The location, the shape, the size, the scattering strength, the tilt or orientation, and periodicity of the scattering structures, along and across (transverse to) the guided light propagation direction (longitudinal axis) in the waveguide can be selected, by adapting the focus, intensity and position of the external processing laser. Specifically, these parameters may be adapted to obtain a desired radiation pattern. See PCT/IB2012/000617 for further details.

The scattering structure may also be mechanical taps chemically or mechanically processed on the fiber cladding.

The out-coupled light may be pursuant to a leaky mode of propagation in the waveguide. The leaky mode may occur due to interaction of the propagating light with changes, such as a gradient, in the index of refraction of the fiber or changes in the radius or geometry of the fiber (which changes may have been induced while drawing the fiber, for example).

The luminescent or photo-luminescent species or material that may be used in the fiber, or, as mentioned below, outside the fiber and in the holder, can be any material that absorbs light at a certain wavelength and in response re-emits light at another wavelength. For instance, these materials can be one or several phosphors that re-emit light at longer wavelengths (down-conversion phosphors) or at shorter wavelengths (up-conversion phosphors). These species can also be one or several types of quantum dots. The addition of the photo-luminescent material may be designed to efficiently produce white illumination light suitable for illuminating samples for quality inspection, where the white light is a combination of the scattered and out-coupled "primary" light that has been wavelength converted into "secondary" light, plus any portion of the primary out-coupled light that was not wavelength converted.

The holder holds the fiber in place. It has an inner surface that partially conforms to the side of the fiber, as it runs longitudinally or along a length direction of the fiber. The holder, the fiber and the coupled light source together act as an illumination device that illuminates the external space that adjoins the holder and/or the fiber. Note that the light source may be located away from the illumination space, because the primary light from the light source may be efficiently delivered to the scattering structures via propagation through an upstream portion of the fiber that is positioned in the holder or through another fiber or waveguide that is coupled to the holder-positioned fiber. The holder can play a passive role, *i.e.* to simply hold the fiber and not alter the out-coupled light that emerges from the side of the fiber. Alternatively, the holder may play an active role, *i.e.* to directly or indirectly impact the shape, the spectrum, and/or the polarization of the illumination pattern and its spatial distribution.

The holder can partially or completely be made out of a reflective material or a diffusing material such that it spreads or re-directs a portion of the out-coupled light, or a portion of the spectrum of the out-coupled light, that is scattered out of the side of the fiber. In another embodiment, the holder can be coated with a reflective material.

The holder can be made of an absorptive material such that it selectively suppresses or blocks one or more portions of the out-coupled light, *i.e.* in a spatial sense. Alternatively, the absorptive material may be designed to selectively suppress or block a portion of the spectrum of the out-coupled light, so that for instance the resulting illumination pattern contains only selected wavelengths or colors.

The holder can be made of a transparent or semi-transparent material such that it might ease the integration of the fiber shape into other systems. In this embodiment, the holder and in particular its outer surface can be shaped in order to form a diffractive or refractive optical element from which the illumination emerges.

The holder can be active, *e.g.* partially or completely made of a material that contains luminescent species, or coated with a material that contains luminescent species. In that case the out-coupled light (which is scattered outside the fiber), or the illumination that emerges from the holder, has been partially or completely wavelength-converted by the luminescent species.

The holder is elongated, or has a beam-like support structure, and can be made into different shapes and of different materials in order to integrate itself and the side-illuminating fiber into a final product. The holder can almost have as many different shapes as the flexibility of the fiber itself allows. For instance, the holder can be made of a polymer (*e.g.,* a plastic), and may be shaped as a ring (circular or elliptical), a partial ring or curve, or a straight line or substantially U-shaped (*e.g.,* parabolic). The beam-like support structure of the holder may also have corners around which the fiber can be routed, and as such the holder may have a polygon shape. The holder may be composed of two or more pieces that have been fixed adjacent to each other at their ends (either adjoining or abutting each other at the adjacent ends, or having a gap between the adjacent ends) to achieve the desired routing or shape for the fiber, *e.g.* two hemi-spherical pieces joined at their ends to form a circle.

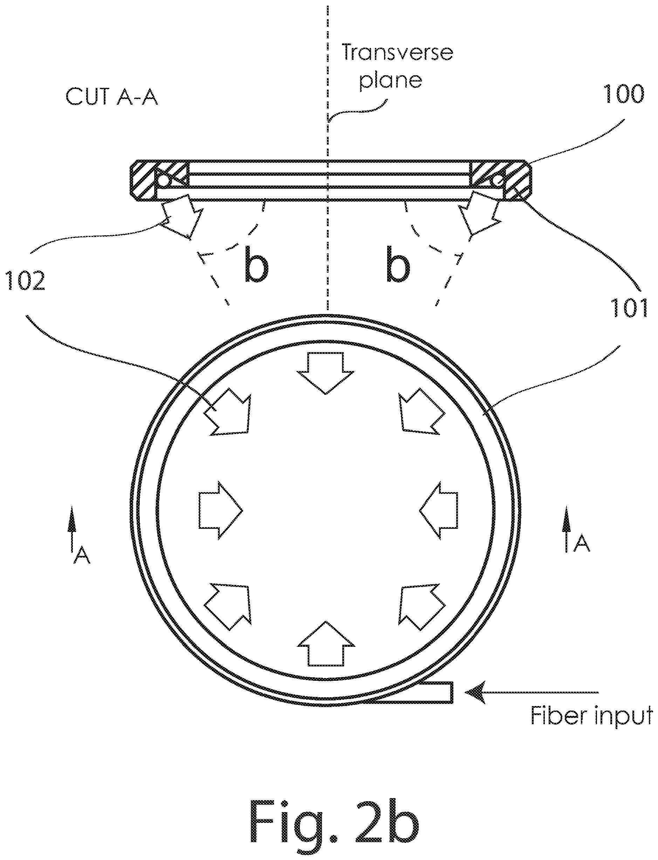

The holder can be made of a module of two or more components each having a different role. For example, as seen and described in **Fig. 2b****,** the holder may be composed of two elongated components or pieces, each defining about one half of the cross section of a complete groove; these two pieces are then joined to each other, lengthwise along their respective side surfaces (rather than at their ends), resulting in the complete groove. Other ways of decomposing the design of the holder 101 into two or more constituent components are possible.

The holder can be flexible, *i.e.* it can be bent while the positioned fiber also bends in the same way, or it can be fixed (rigid) relative to the bending ability of the fiber itself.

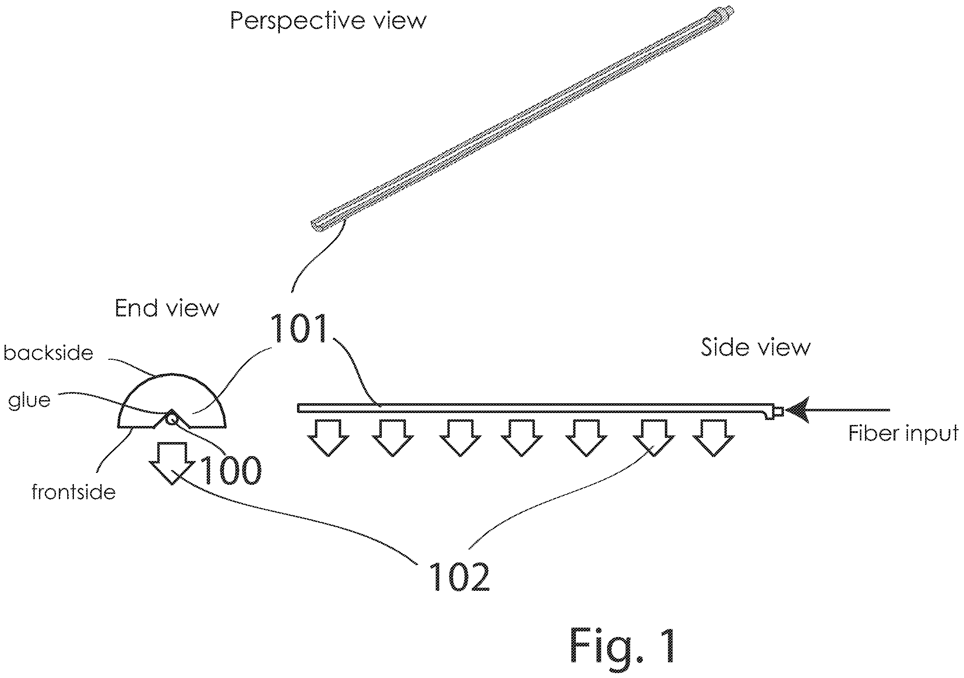

**Fig. 1** shows an example not forming part of the invention of a holder 101 that is shaped as a straight line, to yield a straight-line illumination pattern. An illuminating waveguide 100 (*e.g.,* a single optical fiber) is fixed on its side to the surface of a groove that runs longitudinally along the holder 101. At one end of the holder may be a fiber input coupling where light from a light source (not shown in **Fig. 1**) enters the waveguide 100 and propagates along the longitudinal axis of the waveguide 100, and while doing so encounters the scattering zones that redirect it out of the waveguide through the side of the waveguide thereby contributing to the emerging side illumination 102. The surface of the groove can be V-shaped (as shown in the figure), parabolic-shaped, elliptical shaped, or any shape suitable for gluing the waveguide 100 in position within the groove (to achieve the desired illumination pattern). For better illumination, the groove may be elliptical. Alternatively, the groove may be U-shaped e.g., having either smooth corners or right angled corners, like a slot, in which case the fiber 100 can be fixed into position inside the groove via an interference or press fit in which the U-shaped structure flexes as the waveguide 100 is inserted, to thereby grip the waveguide 100.

In **Fig. 1**, the holder 101 is an elongated support structure that roughly resembles a beam, and in which the groove, in this case having a V-shape, is running longitudinally along the beam structure as shown. In one embodiment, the outward facing surface of the groove is reflective, *e.g.* a reflective coating has been applied, such that it redirects a "backward" directed part of the out-coupled light (that is spread transversally outside of the waveguide) to join a "forward" directed part, into one preferred transverse or radial direction being the "forward" direction, and having a predefined radial spread, thereby resulting in side-illumination 102 emanating outward from the groove, as shown in the figure. The reflective surface may be specular or mirror-like, or the reflective surface may be diffusing.

The support structure of the holder may be produced by injection molding, and is over-molded over the waveguide 100 to thereby form a single part.

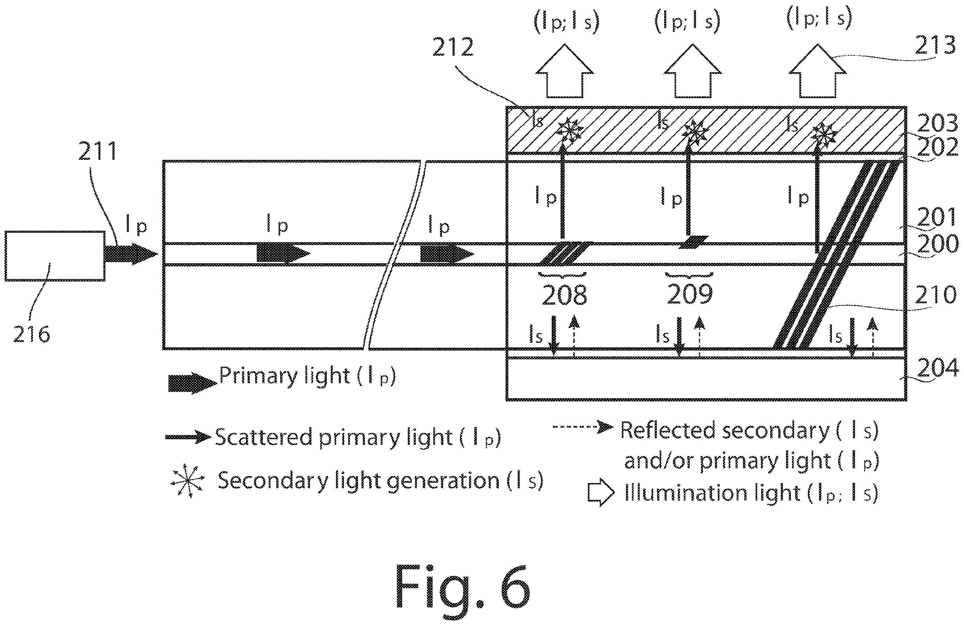

A luminescent (also referred to as photo-luminescent) material or species may be added as part of a layer or coating on the waveguide 100, *e.g.* a coating on the outside surface of a cladding layer in the case of an optical fiber - see, for example, **Fig. 6** which shows how white illumination light can be produced by the light conversion capabilities of the luminescent material.

Note that in **Fig. 1**, the holder 101 is designed to redirect the out-coupled light outward from the mouth of the groove ("front side" of the holder); as an alternative, the side of the waveguide 100 could be radially positioned or orientated so that most of the out-coupled light is directed inward (into the groove) - in that case, the holder 100 may be transparent or semi-transparent so as to allow the transmission of the absorbed out-coupled light which then emerges from the "back side" of the holder 101.

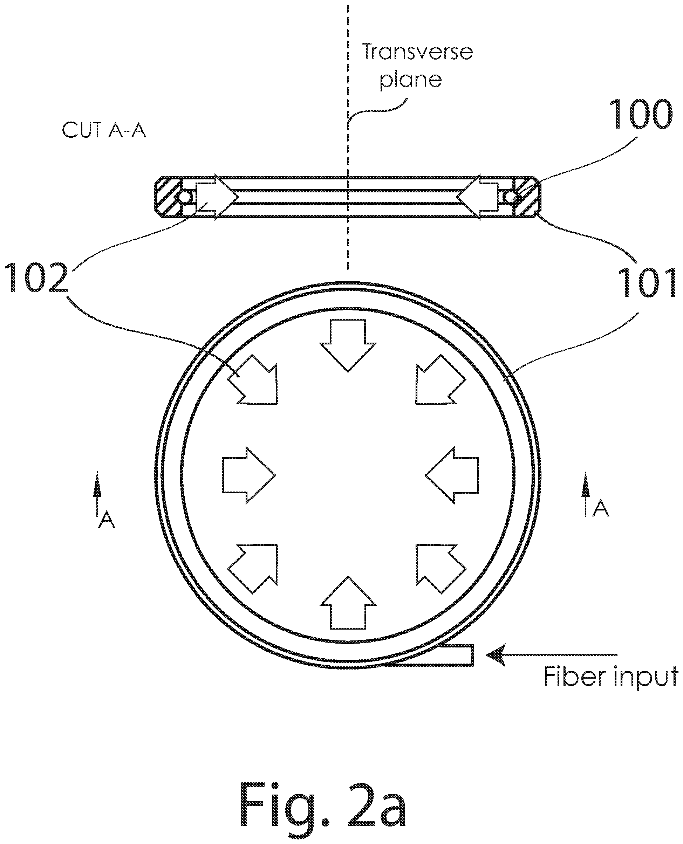

Note also that at least one part of the holder 101 is designed to block or absorb some of the out-coupled light, thereby rendering a restricted or segmented (or discontinuous) illumination pattern, where in effect one or more segments of the holder allow the out-coupled light to pass and illuminate the external space while others do not. In the invention, it is desirable to "hide" a part, not all, of the waveguide 100 by an opaque portion (not shown) that is in front of the out-coupled light that is emerging from the side of the waveguide 100. The opaque portion may be attached to the support structure of the holder 101. In one embodiment, the opaque portion can be moved along the support structure in the longitudinal direction. For example, the opaque portion may be a curved "sector" piece that fits into an outside track (not shown) that is formed on the outside of the support structure, and/or an inside track (not shown) that is formed in the groove, where both tracks run longitudinally around the ring. The sector piece may, for example, have a length of ¼ the ring circumference, and can be moved around the ring-like support structure of **Fig. 2a****,** to any desired position where the out-coupled light is to be blocked or absorbed (thereby not contributing to the final illumination). For example, the ¼ sector piece may be moved to hide the 12 o'clock-3 o'clock sector in one situation, and then moved to hide the 6 o'clock-9 o'clock sector in another situation. Of course, this is only an example as the sector piece may be shorter or longer than ¼ of the ring circumference.

**Fig. 2a** and **Fig. 2b** show the holder 101 being an elongated support structure that is lengthwise shaped as a ring. The waveguide 100 is fixed inside the groove thereby adopting the lengthwise ring shape of the groove. In this embodiment, the ring shaped support structure is reflective on its inner surface (the surface of the groove) such that it redirects the backward part of the out-coupled light (that is spread transversally outside of the waveguide) to join the forward part that is directed outward from the mouth of the groove, and having a predefined radial spread, resulting in the side-illumination 102 as shown.

In **Fig. 2a** the ring structure of the holder 101 and the groove therein are designed such that the out-coupled light is redirected at a small angle relative to the plane of the ring structure, *i.e.* the out-coupled light pattern lies substantially in the plane of the ring structure itself, forming a "low angle distributed ring of light", similar to a dark-field illumination system. This may be achieved by, for example, orienting the groove such that the plane of the ring structure bisects the groove, as shown. In other words, the groove may be oriented so that the angle b (beta, not shown in **Fig. 2a** but see **Fig. 2b**) defined between a) the axis of symmetry of the groove and b) the horizontal plane of the ring structure, is less than thirty degrees. In one embodiment, the waveguide 100, including the scattering structures therein, any photo-luminescent layer formed on the outside surface of waveguide, and the reflective surface of the groove may be designed in this case to yield an illumination 102 whose radial spread (about the longitudinal axis of the waveguide 100) is less than 180°.

In contrast, in **Fig 2b****,** the ring structure (and groove therein) are designed such that the out-coupled light is redirected at a larger angle relative to the horizontally oriented plane of the ring structure, and in this case substantially downward. The out-coupled light in this case still intersects the transverse plane (which, as shown, is transverse to the ring structure itself) but does so at an angle larger than in the embodiment of **Fig. 2a** (which angle is measured from the horizontal plane of the ring structure). This may be achieved by, for example, orienting the groove so that the angle b (beta) defined between a) the axis of symmetry of the groove and b) the horizontal plane of the ring structure, is greater than thirty degrees. For some applications, such as microscopy or inspection by machine vision, the angle may be between thirty degrees and ninety degrees, where the orientation of this radiation pattern may be similar to that obtained from a bright-field illumination system. The angle b (beta) may alternatively be between thirty degrees and one hundred twenty degrees. In one embodiment, the waveguide 100, including the scattering structures therein, any photo-luminescent layer formed on the outside surface of the waveguide 100, and the reflective surface of the groove may be designed together to yield illumination 102 whose radial spread (about the longitudinal axis of the waveguide 100) is less than 180°.

It should be noted that, while the term "axis of symmetry" is used here to help describe the orientation of the groove, the groove may be asymmetrical in some instances. In those instances, the term "axis of symmetry" as used in connection with the angle made relative to the horizontal plane of the ring should be interpreted as referring to the angle of the illumination 102 relative to the horizontal plane.

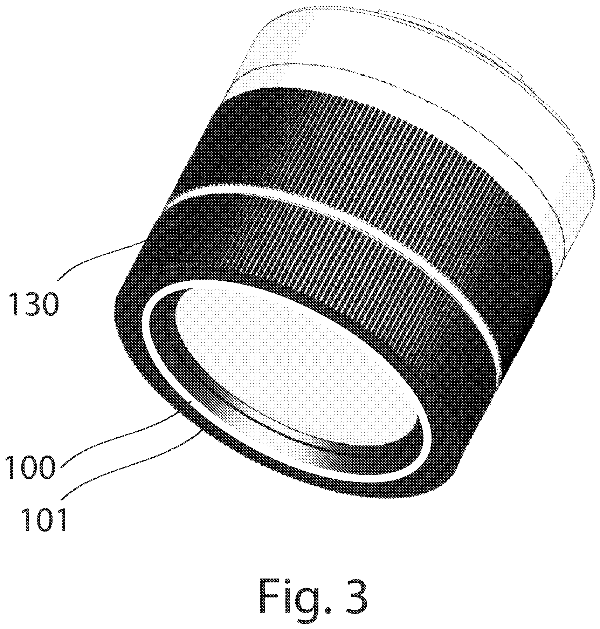

Both of these examples (in **Fig. 2a** and **Fig. 2b**) could be used in microscopy or on inspection cameras, or as a stand-alone hand magnifying lens *(e.g.,* a loupe), for quality inspection. **Fig. 3** shows an example where the holder 101 has been installed into (or may have been integrated at the factory into) an optical objective 130, *e.g.* a single lens, or a multi-lens assembly, with or without a filter, that is to be used with a camera or an inspection device (such as a microscope, or a loupe or hand lens). The illuminating waveguide 100 and the holder 101 in this case form a ring that can be affixed to an inner surface of the objective 130 or on its outer surface, running along a periphery of one of the lenses or of a filter in the camera objective 130. For example, the holder 101 may generally conform, in a lengthwise direction, to the periphery of the lens, while the illumination is aimed inward as shown in **Fig. 2a****.**

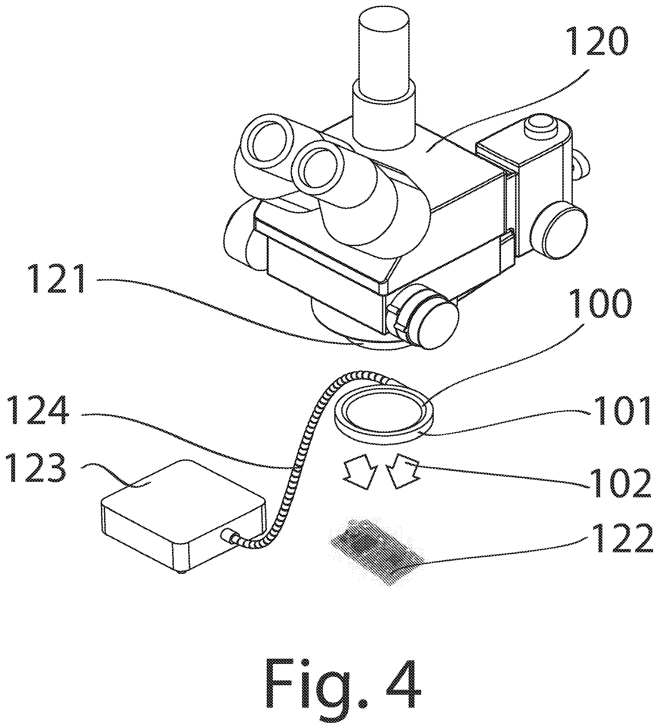

**Fig. 4** shows a full system including the waveguide 100, the holder 101, a light source integrated in a separate enclosure 123, and a waveguide protection element 124 (here a gooseneck, or a stay put flexible tube) that covers the upstream portion of the waveguide 100. The waveguide 100 may continue or extend uninterrupted in an upstream direction from the holder 101, between the holder 101 and the separate enclosure 123 that contains the light source. The system here is used for the inspection of a sample 122 under a microscope 120 that has an objective 121. The holder 101 may be moved (translation, rotation or tilting) by adjusting the shape of the gooseneck, in order to obtain the optimal orientation of the illumination 102 for the inspection of the sample.

The upstream portion of the waveguide 100 as shown in **Fig. 4**, which is the portion between a) where the waveguide 100 is positioned in the holder 101 and b) where the light source is coupled to the waveguide, may not have the side scattering structures formed therein, because side illumination from the waveguide 101 may not be desired along its upstream portion. Also, the waveguide protection element 124 may initially extend in a downstream direction, beyond the upstream portion of the waveguide 100, thereby serving to protect the side-illuminating portion of the waveguide 100 until the latter portion is to be positioned within the groove of the holder 101 (*e.g.,* via over-molding with the support structure of the holder 101, or via direct insertion of the waveguide into the groove).

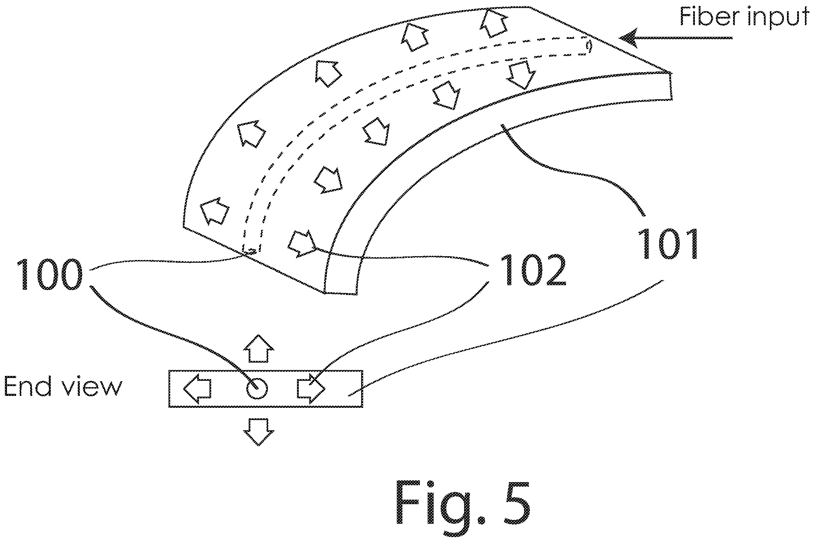

**Fig. 5****.** shows an example not forming part of the invention where the holder 101 is a flexible, and at least partially transparent flat piece, such as a strip or ribbon. The waveguide 100 is embedded inside the holder 101, in that the holder 101 conforms to the shape of the waveguide 100, *e.g.* in contact with the entirety of the side of the waveguide 100. As seen in the end view shown, the out-coupled light 102 is spread both inside and outside (out of the flat portion of) the holder 101. The holder 101 might incorporate luminescent species such that the out-coupled light from the waveguide 100 is partially or totally wavelength converted. Alternatively, the luminescent species may be part of a layer or coating that has been applied to the outside surface of the waveguide 100, prior to the waveguide 100 being embedded into the strip. The holder 101 may alternatively incorporate diffusers to partially diffuse the illumination light that emerges from the holder 101.

**Fig. 6** is used to shown several ways of implementing the waveguide 100. The waveguide 100 may have laser-induced scattering structures therein that as explained below serve to redirect the primary propagating light. The laser induced scattering structures may be viewed as local modifications of the waveguide material by exposure to an external high-energy laser source. Such material modifications are not limited to local refractive index modifications but may also encompass true local material modifications (melted structures or voids). External laser processing sources that may be used include deep UV lasers (CW or excimer) that use the intrinsic photosensitivity of the waveguide material to locally modify the index of refraction; high peak power femtosecond lasers may be used in case the processed waveguide material is not sufficiently photosensitive. For instance, periodic patterns may be inscribed within a fiber core by exposing it to an intense interference pattern using an interferometer or a phase mask. Aperiodic scattering structures could be directly written inside the fiber core using the non-linear response of the glass matrix (preferred optical fiber material) to intense laser light. The strength of a structure may, for example, be in the range Δn=10⁻⁷ to Δn = 10⁻² (amplitude of change in index of refraction). The strength may be higher where the structure has melted. The period of a scattering structure (*e.g.,* grating period) may be randomly selected, for example from the range 100 nm to 2 microns (in accordance with the wavelength of the primary light).

Still referring to section view of **Fig. 6****,** a primary light 211, produced by a primary light source 216 (also referred to as an excitation light source, for reasons given below), in this example is coupled into (*e.g.,* an end surface of) and guided by the waveguide 100. An alternative here is to generate the primary light inside the waveguide, *e.g.* using a fiber laser structure that is formed along the waveguide (*e.g.,* by exciting a doped region of a holey fiber filled with dye). The waveguide may be composed of a core 200 covered with a cladding 201. The core medium is in contact with the cladding medium, and these are designed such that the primary light (represented by lp in the figures) can propagate in the core in the direction shown and along the longitudinal axis of the waveguide. Here, the propagation is via total internal reflection. In one instance, the waveguide is an optical fiber, *e.g.* multi-mode, single-core single-clad fiber made of flexible glass, although other types of cylindrical waveguides are possible such as photonic crystal fiber, micro-structure fiber, holey fiber, multi-clad fiber, and a light pipe having a core medium but no cladding layer, *e.g.* a transparent rod whose peripheral surface may be coated with a mirror layer except for a remote location where the primary light is to be re-directed outward, a transparent rod without a cladding layer and whose peripheral surface is exposed to air such that the air acts as a cladding for propagating the primary light. Note that in some types of cylindrical waveguide, such as micro-structure fiber, the primary light propagates along the waveguide by a bandgap effect due to the periodic nature of the micro-structure fiber that forbids propagation in directions other than along the waveguide.

The waveguide has one or more scattering structures formed therein as shown, which serve to re-direct the propagating or incident primary light out of a side surface of the waveguide. In other words, the primary light is redirected to a desired non-zero angle (*e.g.,* transverse or about 90 degrees) relative to the longitudinal or optical propagation axis of the waveguide. The scattering structures may be confinement regions that produce a resonance of the incident primary light, in a traverse plane (resulting in a re-directed or scattered primary light that is coherent and that may exhibit a small wavelength shift relative to the incident primary light). The scattering structures may be laser-induced structures; these may be formed through the application of external, high-energy laser light to selected locations in the waveguide, as shown. The location, the shape, the size, the scattering strength, the tilt or orientation, and periodicity of the scattering structures, along and across (transverse to) the primary light propagation direction (longitudinal axis) in the waveguide can be selected, by adapting the focus, intensity and position of the external processing laser beam. The directionality of the re-directed primary light (its radial angle about the longitudinal axis of the waveguide, and its radial spread) may be primarily a function of the tilt and period of the scattering structures, although additional parameters may need to be considered and balanced as a whole, to obtain the desired re-directed primary light radiation pattern.

In one case, a set of scattering structures 208, 209, 210 such as periodic micro reflectors or tilted gratings are formed in the waveguide. In another embodiment, the scattering structures 208-210 may be aperiodic structures such as micro-diffusers. In both cases, the scattering structures may be formed entirely inside the core 200 (depicted by structures 208), in just a portion of the interface that joins the core 200 and the cladding 201 (structures 209), and/or across the entire interface (structures 210). Any suitable combination of such structures 208-210 may be used to define a scattering structure or zone; for instance, the scattering zone may be constituted entirely of just one type of scattering structure, *e.g.* only entire-interface-crossing structure 210. In general, any suitable combination and/or variation of one or more of the scattering structures 208-210 that yields the desired radiation pattern for the re-directed or out-coupled primary light, lₚ may be used. The length of a scattering zone (containing one or more scattering structures) may be the same as or smaller than the length of the photo-luminescent layer 203 or photo-luminescent layer segment that is associated with the zone. Alternatively, the scattering zone may extend further than the photo-luminescent layer 203 or the photo-luminescent layer segment.

The waveguide in this case has a photo-luminescent layer (medium) 203, which is located so as to partially, or completely, absorb the re-directed primary light lp to thereby emit secondary light 212 (lₛ) in accordance with a photo-luminescence process. This is also referred to as wavelength converted light. The resulting combination of this secondary light 212 and any unabsorbed primary light (lₚ; lₛ) is the desired illumination light 213. Such an illumination system may provide special advantages in the area of cylindrical waveguide-based distributed illumination systems, including improved energy efficiency, scalability, and homogeneous light output.

The photo-luminescent layer 203 may be made of a mixture of silicone (*e.g*., as part of an optically clear adhesive such as polydimethylsiloxane, PDMS) or other suitable material such as epoxy, together with a phosphor. The concentration of the phosphor and the size of the phosphor particles may be selected to modify or control the color temperature and luminous efficiency of the illumination system. Note the "phosphor" as used here refers to any material that exhibits luminescence, *e.g.* phosphorescent materials, fluorescent materials. The layer 203 may be composed of one or more layers of different compositions. For instance, there may be one or more intermediate non-phosphor layers sandwiched by phosphor layers. The photo-luminescent layer 203 may be located outside the waveguide. The layer 203 may be deposited directly on the external side surface of the waveguide, to form an integral or single device with the waveguide. The layer 203 may cover the entire side surface of the waveguide, or as seen in **Fig. 6** it may cover just the front portion of waveguide with a back portion covered by a reflector layer 204. In general, the photo-luminescent layer 203 need not entirely cover the region along the longitudinal axis of the waveguide that scatters the primary light, *i.e.* some of the scattered primary light could bypass the photo-luminescent layer 203 and still contribute to the desired illumination. The length of the photo-luminescent layer 203 or photo-luminescent layer segment may be equal to or larger than its associated scattering zone, and may also depend on the angle of the incident, re-directed primary light.

A protection layer (not shown) may be added, in this case in contact with the outer side surface of the photo-luminescent layer 203, to cover the latter for purposes of physical protection and/or reduction of the index of refraction step between the layer 203 and the outer medium, *i.e.* external to the waveguide. The protection layer may also contain or simply be an anti-reflection coating, serving to reduce or minimize any back-reflection of the secondary light Iₛ off its back or rear surface.

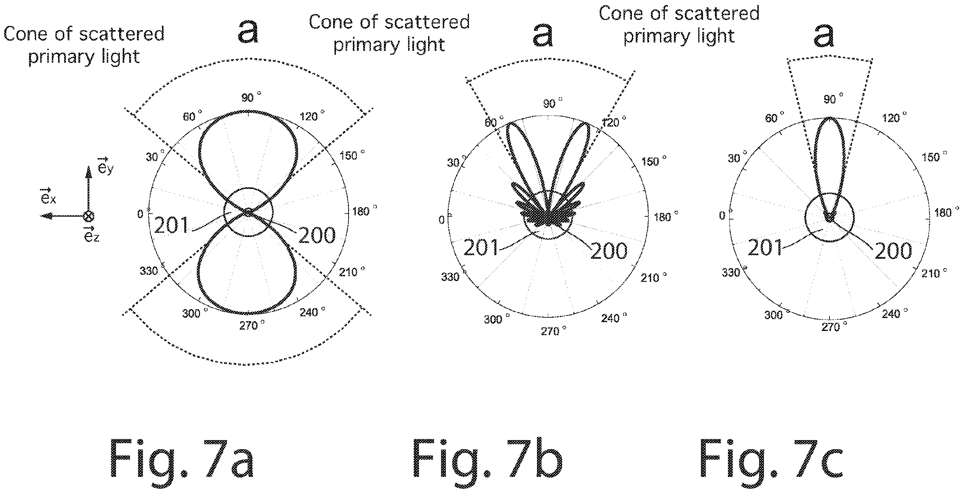

The primary light strikes the photo-luminescent layer 203 at an angle that may be defined or fixed by the shape of the scattering structure that re-directed it; this may be designed to achieve the desired conversion by the photoluminescence process. In particular, the scattering efficiency, the distribution and the directionality of the radiated primary light are given by a combination of certain characteristics of the guided primary light (*e.g.,* its wavelength, state of polarization, modal distribution) and certain parameters of the scattering structures (*e.g.,* their magnitude, shape, and periodicity along/across the propagation axis). **Figs. 7a-7c** are sectional views of example radiation patterns for the re-directed primary light, showing three possible combinations of fiber and scattering structure parameters that provide three different scattering distributions for the primary high energy light. The radiation pattern runs along the longitudinal axis (z-direction), according to the length of the scattering zone.

In **Fig. 7a****,** a single micro-diffuser has been processed inside the core 200 of the waveguide. The primary light 211 is launched into the core 200 in, for example, a linear state of polarization at zero degrees, in the direction of the positive z-axis (into the paper), and the resulting scattered light distribution is shown. In this case, there are two radiation lobes opposing each other, each forming a large scattering cone having a radial spread a, alpha. In contrast, **Fig. 7b** shows a pattern that can be produced by, *e.g.* a tilted grating formed inside the core 200. Here, the primary light wavelength is chosen to be at an edge of the scattering wavelength band of the tilted grating (partially coherent scattering). The scattered light distribution here also presents two main lobes together forming a medium size cone of scattering angle a, alpha. Finally, in **Fig. 7c****,** the tilted grating has been designed such that the primary light wavelength is at a location of the scattering wavelength band of the tilted grating where there is maximum scattering (coherent scattering). The resulting scattered light distribution has a single main lobe whose angle a, alpha is smaller than in **Fig. 7a****.** For many applications, the scattering structures should be designed to yield a radiation pattern, for the re-directed primary light, that consists of a single lobe (similar to **Fig. 7c**) of up to 180 degrees of radial coverage or spread.

Note that generally speaking, a scattering structure is dispersive in that different frequency or color bands will be scattered at different angles. However, in most instances, the scattering bandwidth will be much broader than the relatively narrow bandwidth of the primary light contemplated here.
**Fig. 1** shows that the groove may be about as large as the diameter of a cylindrical shaped waveguide 100, that is, the depth of the groove, as measured from the midpoint of a line that intersects its two front edges back to the vertex, is greater than the diameter of the waveguide 100. The groove may be smaller than the diameter of the waveguide 100, see *e.g.* **Fig. 2a** in the cross section view where the groove is shallower than the diameter of the waveguide 100, or it may be significantly deeper than the diameter of the waveguide 100 - see **Fig. 2b** and the cross-section view therein. In addition, while **Figs. 2a** and **2b** depict a circular holder 101, the holder 101 can, more generally, have any ring-like shape that need not be a circle but instead could be oval or elliptical (like "0" - not shown). In yet another embodiment, a second ring-like support structure may be joined to the first support structure so that together they form a figure eight, or are lengthwise shaped like "8" (not shown). The second support structure may also have a groove formed along the inside surface of its ring-like support structure, similar to any of those described above. The waveguide that is held in the first support structure may extend into and also be held in position inside the groove of the second support structure. The description is thus to be regarded as illustrative instead of limiting.

## Claims

1. An illumination apparatus comprising:
a holder (101) having a support structure in which a groove is formed, wherein the groove is sized to receive therein a side of a waveguide (100) that is to be fixed in position next to a surface of the groove, wherein the groove runs in a longitudinal direction along the length of the side of the waveguide (100);
wherein the holder (101) is to one of a) reflect, diffuse or absorb some light that is out-coupled from the side of the waveguide (100), or b) wavelength convert some of the out-coupled light from the side of the waveguide (100), to produce side illumination (102) that emerges from a side of the holder (101), the illumination apparatus being **characterized in that** the holder (101) comprises an opaque portion for hiding a part, not all, of the out-coupled light that is emerging from the side of the waveguide (100), wherein the opaque portion prevents some, not all, of the out-coupled light that is emerging from the side of the waveguide (100), from reaching an illumination region, while other portions of the holder (101) allow the out-coupled light to reach the illumination region.

2. The apparatus of claim 1 wherein the support structure of the holder (101) is a ring and wherein the groove runs along an inner surface of the ring and an axis of symmetry of the groove makes an acute angle with the plane of the ring that is up to one hundred and twenty degrees.

3. The apparatus of claim 1 wherein the support structure of the holder (101) is a ring and wherein the groove runs along an inner surface of the ring and an axis of symmetry of the groove makes an acute angle with the plane of the ring that is between thirty degrees and ninety degrees.

4. The apparatus of claim 1 wherein the support structure of the holder (101) is a ring and wherein the groove runs along an inner surface of the ring and an axis of symmetry of the groove makes an angle with the plane of the ring that is between thirty degrees and one hundred and twenty degrees.

5. The apparatus of any one of the previous claims wherein the holder (101) is flexible so that the shape of the support structure, and therefore that of the side illumination (102), can be changed by a user's hand.

6. The apparatus of claim 1 wherein an inner surface of the groove has some areas that are partially reflective and some other areas that are partially absorptive.

7. The apparatus of claim 1 wherein the support structure comprises luminescent material that wavelength converts some of the out-coupled light from the side of the waveguide (100).

8. The apparatus of any one of the previous claims further comprising the waveguide, wherein the support structure is over-molded over the waveguide (100) to form a single part.

9. The apparatus of any one of the previous claims further comprising the waveguide (100) and a light source to which the waveguide (100) is coupled, wherein light from the source is to propagate in a longitudinal direction of the waveguide (100), the waveguide (100) having a scattering zone formed therein which causes some of the propagating light to be out-coupled along a side of the waveguide (100), and
wherein the holder (101) and the waveguide (100) are designed such that the side illumination (102) that emerges from a side of the holder (101) has a radial spread of less than 180 degrees about the longitudinal axis of the waveguide (100).

10. The apparatus of claim 9 wherein the scattering zone is adapted so that the out-coupled light has a multi-lobe radiation pattern about a longitudinal axis of the waveguide (100), wherein each lobe has a radial spread that is less than 180 degrees.

11. The apparatus of claim 9 wherein the scattering zone is adapted so that the out-coupled light has an isotropic radiation pattern about a longitudinal axis of the waveguide (100).

12. The apparatus of any one of the previous claims further comprising an optical lens (130), wherein the contour of the support structure is larger than a contour of the lens (130), and wherein the support structure is substantially concentric with the lens (130).

13. The apparatus of claim 9 further comprising a camera lens (130) and a lens holder to which the camera lens (130) is attached, wherein the support structure is an integral part of the lens holder (101).

14. The apparatus of claim 1 wherein the holder (101) is to selectively absorb or reflect out-coupled light from the side of the waveguide (100) in accordance with a predetermined spatial pattern.

15. The apparatus of claim 1 wherein the holder (101) is to selectively absorb or reflect out-coupled light from the side of the waveguide in accordance with a predetermined spectral content.

16. The apparatus of claim 1 wherein the holder (101) is transparent or semi-transparent so as to pass the absorbed out-coupled light.

17. The apparatus of claim 1 wherein the opaque portion is moveable along the support structure along the length of the side of the waveguide (100) to a desired location where some of the out-coupled light is blocked or absorbed thereby not contributing to a final illumination.

18. The apparatus of claim 1, wherein the waveguide (100) is less rigid than the support structure, in terms of a bending force applied transversely to the side of the waveguide (100) and to the side of the support structure, and therefore conforms to a contour or lengthwise shape of the support structure.

## Patentansprüche

1. Beleuchtungsvorrichtung, die Folgendes umfasst:
einen Halter (101) mit einer Stützstruktur, in der eine Rille gebildet ist, wobei die Rille dimensioniert ist, um darin eine Seite eines Lichtwellenleiters (100) aufzunehmen, der neben einer Fläche der Rille in Position zu befestigen ist, wobei die Rille in einer Längsrichtung entlang der Länge der Seite des Lichtwellenleiters (100) verläuft;
wobei der Halter (101) eines von a) etwas Licht, das aus der Seite des Lichtwellenleiters (100) ausgekoppelt wird, reflektieren, diffundieren oder absorbieren soll oder b) die Wellenlänge von einigem des aus der Seite des Lichtwellenleiters (100) ausgekoppelten Lichts umwandeln soll, um eine Seitenbeleuchtung (102) zu produzieren, die aus einer Seite des Halters (101) austritt, wobei die Beleuchtungsvorrichtung **dadurch gekennzeichnet ist, dass** der Halter (101) einen opaken Abschnitt zum Verbergen von einem Teil, nicht von allem, des ausgekoppelten Lichts, das aus der Seite des Lichtwellenleiters (100) austritt, umfasst, wobei der opake Abschnitt verhindert, dass einiges, nicht alles, des ausgekoppelten Lichts, das aus der Seite des Lichtwellenleiters (100) austritt, eine Beleuchtungsregion erreicht, während andere Abschnitte des Halters (101) es erlauben, dass das ausgekoppelte Licht die Beleuchtungsregion erreicht.

2. Vorrichtung nach Anspruch 1, wobei die Stützstruktur des Halters (101) ein Ring ist und wobei die Rille entlang einer Innenfläche des Rings verläuft und eine Symmetrieachse der Rille einen spitzen Winkel mit der Ebene des Rings bildet, der bis zu hundertzwanzig Grad beträgt.

3. Vorrichtung nach Anspruch 1, wobei die Stützstruktur des Halters (101) ein Ring ist und wobei die Rille entlang einer Innenfläche des Rings verläuft und eine Symmetrieachse der Rille einen spitzen Winkel mit der Ebene des Rings bildet, der zwischen dreißig Grad und neunzig Grad beträgt.

4. Vorrichtung nach Anspruch 1, wobei die Stützstruktur des Halters (101) ein Ring ist und wobei die Rille entlang einer Innenfläche des Rings verläuft und eine Symmetrieachse der Rille einen Winkel mit der Ebene des Rings bildet, der zwischen dreißig Grad und hundertzwanzig Grad beträgt.

5. Vorrichtung nach einem der vorhergehenden Ansprüche, wobei der Halter (101) flexibel ist, derart, dass die Form der Stützstruktur und somit die der Seitenbeleuchtung (102) von einer Hand eines Benutzers verändert werden kann.

6. Vorrichtung nach Anspruch 1, wobei eine Innenfläche der Rille einige Bereiche aufweist, die teilweise reflektierend sind, und einige andere Bereiche, die teilweise absorbierend sind.

7. Vorrichtung nach Anspruch 1, wobei die Stützstruktur leuchtendes Material umfasst, das die Wellenlänge von einigem des aus der Seite des Lichtwellenleiters (100) ausgekoppelten Lichts umwandelt.

8. Vorrichtung nach einem der vorhergehenden Ansprüche, die ferner den Lichtwellenleiter umfasst, wobei die Stützstruktur auf den Lichtwellenleiter (100) aufgeformt ist, um ein einzelnes Teil zu bilden.

9. Vorrichtung nach einem der vorhergehenden Ansprüche, die ferner den Lichtwellenleiter (100) und eine Lichtquelle, an die der Lichtwellenleiter (100) gekoppelt ist, umfasst, wobei das Licht von der Quelle in eine Längsrichtung des Lichtwellenleiters (100) ausgebreitet werden soll, wobei der Lichtwellenleiter (100) eine Verteilungszone aufweist, die darin gebildet ist und die bewirkt, dass einiges des ausgebreiteten Lichts entlang einer Seite des Lichtwellenleiters (100) ausgekoppelt wird, und
wobei der Halter (101) und der Lichtwellenleiter (100) derart konzipiert sind, dass die Seitenbeleuchtung (102), die aus einer Seite des Halters (101) austritt, eine radiale Streuung um die Längsachse des Lichtwellenleiters (100) von weniger als 180 Grad aufweist.

10. Vorrichtung nach Anspruch 9, wobei die Verteilungszone derart angepasst ist, dass das ausgekoppelte Licht ein mehrkeuliges Strahlungsmuster um eine Längsachse des Lichtwellenleiters (100) aufweist, wobei jede Keule eine radiale Streuung von weniger als 180 Grad aufweist.

11. Vorrichtung nach Anspruch 9, wobei die Verteilungszone derart angepasst ist, dass das ausgekoppelte Licht ein isotropes Strahlungsmuster um eine Längsachse des Lichtwellenleiters (100) aufweist.

12. Vorrichtung nach einem der vorhergehenden Ansprüche, die ferner ein optisches Objektiv (130) umfasst, wobei die Kontur der Stützstruktur größer ist als eine Kontur des Objektivs (130) und wobei die Stützstruktur im Wesentlichen mit dem Objektiv (130) konzentrisch ist.

13. Vorrichtung nach Anspruch 9, die ferner ein Kameraobjektiv (130) und einen Objektivhalter, an dem das Kameraobjektiv (130) befestigt ist, umfasst, wobei die Stützstruktur ein integrales Teil des Objektivhalters (101) ist.

14. Vorrichtung nach Anspruch 1, wobei der Halter (101) aus der Seite des Lichtwellenleiters (100) ausgekoppeltes Licht gemäß einem vorbestimmten räumlichen Muster selektiv absorbieren oder reflektieren soll.

15. Vorrichtung nach Anspruch 1, wobei der Halter (101) aus der Seite des Lichtwellenleiters ausgekoppeltes Licht gemäß einem vorbestimmten spektralen Inhalt selektiv absorbieren oder reflektieren soll.

16. Vorrichtung nach Anspruch 1, wobei der Halter (101) transparent oder halbtransparent ist, um das absorbierte ausgekoppelte Licht durchzulassen.

17. Vorrichtung nach Anspruch 1, wobei der opake Abschnitt entlang der Stützstruktur entlang der Länge der Seite des Lichtwellenleiters (100) zu einer gewünschten Stelle bewegbar ist, an der einiges des ausgekoppelten Lichts blockiert oder absorbiert wird, um nicht zu einer endgültigen Beleuchtung beizutragen.

18. Vorrichtung nach Anspruch 1, wobei der Lichtwellenleiter (100) hinsichtlich einer Biegekraft, die quer auf die Seite des Lichtwellenleiters (100) und auf die Seite der Stützstruktur aufgebracht wird, weniger starr als die Stützstruktur und daher mit einer Kontur oder Längsform der Stützstruktur konform ist.

## Revendications

1. Appareil d'éclairage comprenant :
un support (101) qui possède une structure d'appui dans laquelle une rainure est formée, dans lequel la rainure est dimensionnée pour recevoir dedans un côté d'un guide d'ondes (100) qui doit être fixé en position près d'une surface de la rainure, dans lequel la rainure est orientée dans une direction longitudinale le long de la longueur du côté du guide d'ondes (100) ;
dans lequel le support (101) est destiné à a) réfléchir, diffuser ou absorber de la lumière qui est couplée en sortie du côté du guide d'ondes (100), ou b) convertir en longueur d'onde une partie de la lumière couplée en sortie du côté du guide d'ondes (100), afin de produire un éclairage latéral (102) qui émerge d'un côté du support (101), l'appareil d'éclairage étant **caractérisé en ce que** le support (101) comprend une partie opaque destinée à dissimuler une partie, et non la totalité, de la lumière couplée en sortie qui émerge du côté du guide d'ondes (100), dans lequel la partie opaque empêche une partie, et non la totalité, de la lumière couplée en sortie qui émerge du côté du guide d'ondes (100) d'atteindre une zone d'éclairage, tandis que d'autres parties du support (101) permettent à la lumière couplée en sortie d'atteindre la zone d'éclairage.

2. Appareil selon la revendication 1, dans lequel la structure d'appui du support (101) est une bague, et dans lequel la rainure se trouve le long d'une surface intérieure de la bague et un axe de symétrie de la rainure crée un angle aigu avec le plan de la bague qui peut atteindre cent vingt degrés.

3. Appareil selon la revendication 1, dans lequel la structure d'appui du support (101) est une bague, et dans lequel la rainure se trouve le long d'une surface intérieure de la bague et un axe de symétrie de la rainure crée un angle aigu avec le plan de la bague compris entre trente degrés et quatre-vingt-dix degrés.

4. Appareil selon la revendication 1, dans lequel la structure d'appui du support (101) est une bague, et dans lequel la rainure se trouve le long d'une surface intérieure de la bague et un axe de symétrie de la rainure crée un angle avec le plan de la bague compris entre trente degrés et cent vingt degrés.

5. Appareil selon l'une quelconque des revendications précédentes, dans lequel le support (101) est flexible de sorte que la forme de la structure d'appui, et par conséquent, de celle de l'éclairage latéral (102), puisse être changée par la main d'un utilisateur.

6. Appareil selon la revendication 1, dans lequel une surface intérieure de la rainure présente des zones qui sont partiellement réfléchissantes et d'autres zones qui sont partiellement absorbantes.

7. Appareil selon la revendication 1, dans lequel la structure d'appui comprend un matériau luminescent qui convertit en longueur d'onde une partie de la lumière couplée en sortie du côté du guide d'ondes (100).

8. Appareil selon l'une quelconque des revendications précédentes, comprenant en outre le guide d'ondes, dans lequel la structure d'appui est surmoulée par-dessus le guide d'ondes (100) afin de former une seule pièce.

9. Appareil selon l'une quelconque des revendications précédentes, comprenant en outre le guide d'ondes (100) et une source de lumière à laquelle le guide d'ondes (100) est couplé, dans lequel la lumière qui provient de la source est destinée à se propager dans une direction longitudinale du guide d'ondes (100), le guide d'ondes (100) ayant une zone de diffusion, qui est formée à l'intérieur de celui-ci et qui fait qu'une partie de la lumière qui se propage est couplée en sortie le long d'un côté du guide d'ondes (100), et
dans lequel le support (101) et le guide d'ondes (100) sont conçus de sorte que l'éclairage latéral (102) qui émerge d'un côté du support (101) présente une diffusion radiale inférieure à 180 degrés autour de l'axe longitudinal du guide d'ondes (100).

10. Appareil selon la revendication 9, dans lequel la zone de diffusion est adaptée de sorte que la lumière couplée en sortie présente un modèle de rayonnement à lobes multiples autour d'un axe longitudinal du guide d'ondes (100), dans lequel chaque lobe présente une diffusion radiale qui est inférieure à 180 degrés.

11. Appareil selon la revendication 9, dans lequel la zone de diffusion est adaptée de sorte que la lumière couplée en sortie présente un modèle de rayonnement isotrope autour d'un axe longitudinal du guide d'ondes (100) .

12. Appareil selon l'une quelconque des revendications précédentes, comprenant en outre une lentille optique (130), dans lequel le contour de la structure d'appui est plus grand qu'un contour de la lentille (130), et dans lequel la structure d'appui est sensiblement concentrique avec la lentille (130).

13. Appareil selon la revendication 9, comprenant en outre une lentille d'appareil photo (130) et un support de lentille sur lequel la lentille d'appareil photo (130) est fixée, dans lequel la structure d'appui fait partie intégrante du support de lentille (101).

14. Appareil selon la revendication 1, dans lequel le support (101) est destiné à absorber ou réfléchir sélectivement la lumière couplée en sortie du côté du guide d'ondes (100) selon un modèle spatial prédéterminé.

15. Appareil selon la revendication 1, dans lequel le support (101) est destiné à absorber ou réfléchir sélectivement la lumière couplée en sortie du côté du guide d'ondes selon un contenu spectral prédéterminé.

16. Appareil selon la revendication 1, dans lequel le support (101) est transparent ou semi-transparent de façon à faire passer la lumière couplée en sortie absorbée.

17. Appareil selon la revendication 1, dans lequel la partie opaque est mobile le long de la structure d'appui le long de la longueur du côté du guide d'ondes (100) jusqu'à un emplacement souhaité où une partie de la lumière couplée en sortie est bloquée ou absorbée afin de ne pas contribuer à un éclairage final.

18. Appareil selon la revendication 1, dans lequel le guide d'ondes (100) est moins rigide que la structure d'appui, en termes de force de cintrage appliquée transversalement au côté du guide d'ondes (100) et au côté de la structure d'appui, et se conforme ainsi à un contour ou une forme dans le sens de la longueur de la structure d'appui.
